(19) Europäisches Patentamt / European Patent Office / Office européen des brevets

(11) **EP 3 197 038 B1**

(12) **EUROPEAN PATENT SPECIFICATION**

(45) Date of publication and mention of the grant of the patent:
**05.12.2018 Bulletin 2018/49**

(51) Int Cl.:
**H02M 7/483** (2007.01)   **H02H 3/20** (2006.01)

(21) Application number: **17152577.7**

(22) Date of filing: **23.01.2017**

(54) **MODULAR MULTILEVEL CONVERTER (MMC) TOPOLOGIES WITH VOLTAGE SELF-BALANCING CAPABILITY**

**MODULARE MEHRSTUFIGE WANDLERTOPOLOGIEN MIT SPANNUNGSSELBSTAUSGLEICHSFÄHIGKEIT**

**TOPOLOGIES DE CONVERTISSEUR MULTI-NIVEAUX MODULAIRE (MMC) AYANT UNE CAPACITÉ D'AUTO-ÉQUILIBRAGE DE TENSION**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 25.01.2016   CN 201610047406
25.01.2016   CN 201610047402
25.01.2016   CN 201610047416
25.01.2016   CN 201610047412

(43) Date of publication of application:
**26.07.2017 Bulletin 2017/30**

(73) Proprietor: **North China Electric Power University Beijing 102206 (CN)**

(72) Inventors:
• **ZHAO, Chengyong**
**Beijing 102206 (CN)**
• **XU, Jianzhong**
**Beijing 102206 (CN)**
• **LIU, Hang**
**Beijing 102206 (CN)**

(74) Representative: **Twelmeier Mommer & Partner Patent- und Rechtsanwälte mbB Westliche Karl-Friedrich-Strasse 56-68 75172 Pforzheim (DE)**

(56) References cited:
CN-A- 102 223 080     CN-A- 102 832 841
US-A1- 2008 198 630

**Description**

**Field of the Invention**

This Invention relates to the field of flexible power transmission, and more particularly, to modular multilevel converter topologies with voltage self-balancing capability. A modular multilevel converter according to the preamble of claim 1 is known from CN 102 832 841 A.

**Background of the Invention**

The modular multilevel converter (MMC) is one of the most promising converters in DC power transmission. The MMC constructs the converter valve in the form of sub-module (SM) cascade, avoiding the direct series connection of a great number of components, lowering the requirement on the consistency of components and also facilitating expansion and redundancy configurations. With the increase of levels, the output waveforms approximate to sine, thus effectively avoiding the defects of the low-level VSC-HVDC (Voltage Source Converter based High Voltage Direct Current Transmission).

Different from the VSC of two levels or three levels, the DC-link voltage of the conventional MMC is not supported only by one large capacitor but a series of mutually independent suspending SM capacitors in series. In order to ensure the quality of the waveforms output from the AC-voltage and ensure every power semiconductor in the module bearing equal stress, and also in order to better support DC-link voltage and reduce interphase circulating current, we must ensure the SM capacitor voltage keeps in dynamically stable state in the periodic flow of the bridge arm power.

The voltage balancing control algorithm based on capacitor voltage sort is the main idea at present to solve the problems in respect of the half-bridge SM capacitor voltage balancing in MMC and the effectiveness of this proposal has been verified in simulation and practice; however, some of its inherent defects have been appearing. Firstly, the realization of sorting has to rely on the sampling of capacitor voltage at millisecond level and needs a great number of sensors and optical fiber channels. Secondly, when the number of the SMs in the MMC bridge arm increases, the computation complexity for capacitor voltage sorting will increase rapidly, thus bringing a large challenge to the hardware design of the controller. Moreover, the realization of the voltage balancing control algorithm has a high requirement on the triggering frequency of the SM and the triggering frequency is closely related to voltage balancing effect; in practice, probably due to the limitation of voltage balancing effect, the triggering frequency of the SM has to be set higher, thus increasing the power loss of the converter.

The document titled "A DC-Link Voltage Self-balancing Method for a Diode-Clamped Modular Multilevel Converter With Minimum Number of Voltage Sensors" has presented an idea that realizes the voltage balancing for the SM capacitor based on the clamped diode and transformer. However, this proposal, to a certain extent, has destroyed the modularity of MMC; the SM capacitor energy exchange channel is restricted within the phase; the existing structure of the MMC is incapable of working fully; and the introduction of the three transformers, in addition to complicating the control strategy, also leads to a large reconstruction cost.

**Contents of the Invention**

This Invention is to provide a series of economical novel MMC topologies with voltage self-balancing capability that do not rely on the voltage balancing control algorithm and simultaneously are capable of lowering SM triggering frequency and capacitor's capacitance.

The goal of this Invention is accomplished with the following technical solutions, as set forth in the independent device claim 1. The dependent claims recite advantageous embodiments of the invention. According to a preferred embodiment, multilevel converter (MMC) topologies with voltage self-balancing capability consist of the Phase I module, Phase II module, Phase III module and the voltage self-balancing auxiliary circuit. Said Phase I module, Phase II module and Phase III module respectively consists of two bridge arms, each of which comprises N bridge arm SM(s). In Approach 1, said voltage self-balancing auxiliary circuit comprises $6N+5$ clamped diodes and two auxiliary capacitors ($C_1$ and $C_2$) and two auxiliary insulated gate bipolar transistor (IGBT) modules ($T_1$ and $T_2$); or, in Approach 2, said voltage self-balancing auxiliary circuit comprises 6N-3 clamped diodes and 4 interphase clamped diodes.

In Approach 1, i.e. a first circuit topology, the SMs contained in said Phase I module and Phase III module are Category I SMs, which are connected to each other and also to the positive and negative poles of the DC bus, said Category I SMs, via the port leading out from the positive pole of the capacitor contained therein, are connected to said voltage self-balancing auxiliary circuit, the SMs contained in said Phase II module are the Category II SMs, which are connected to each other and also to the positive and negative poles of the DC bus, said Category II SMs, via the port leading out from the negative pole of the capacitor contained therein, are connected to said voltage self-balancing auxiliary circuit;

in Approach 2, i.e. a second circuit topology, except the first SM of upper bridge arm in Phase I module and Phase III module, which are the special SMs of Phases A and C, the rest SMs are Category I SMs, said Category I SMs, via the port leading out from the positive pole of the capacitor contained therein, are connected to said voltage self-balancing auxiliary circuit, except the last lower arm SM in Phase II module, which are the special SMs of Phases B, the rest SMs are Category II SMs, via the port leading out from the negative pole of the capacitor contained therein, are connected to said voltage self-balancing auxiliary circuit.

In both approaches, Category I SMs consist of half-bridge SMs, full-bridge SMs or single-clamped SMs, or the mixed SMs of such three. Category II SMs consist of half-bridge SMs, full-bridge SMs or single-clamped SMs, or the mixed SMs of such three. In Approach 2, the special SMs consist of half-bridge SM, full-bridge SM or single-clamped SM.

In said voltage self-balancing auxiliary circuit of Approach 1, the positive pole of one auxiliary capacitor ($C_1$) is connected with one auxiliary IGBT module ($T_1$) and its negative pole is connected with the clamped diode and the positive pole of the DC bus; the negative pole of the other auxiliary capacitor ($C_2$) is connected with the other auxiliary IGBT module ($T_2$) and its positive pole is connected with the clamped diode and the negative pole of the DC bus. The clamped diode is connected to the positive leading-out port of the Category I SM capacitor and the positive poles of the two auxiliary capacitors ($C_1$ and $C_2$), and also connected to the negative leading-out port of the Category II SM capacitor and the negative poles of the two auxiliary capacitors ($C_1$ and $C_2$).

The triggering signals of said auxiliary IGBT module ($T_1$) are consistent with the triggering signals of the first SM of upper bridge arm in the Phase I module and the Phase III module, the triggering signals of said auxiliary IGBT module ($T_2$) are consistent with those of the triggering signals of the last SM of lower bridge arm in the Phase II module.

In Approach 2, the special SMs of Phases A and C, via the leading-out port, is connected to the Category I SM; in addition, via the leading out port from the positive pole of the capacitor contained therein, it is connected to the clamped diode of the voltage self-balancing auxiliary circuit, and also via the port leading out from the negative pole of the capacitor contained therein, connected to the interphase clamped diode of the voltage self-balancing auxiliary circuit. the special SM of Phases B, via the leading-out port, is connected to the negative pole of the DC bus, and also via the leading-out port, is connected to the Category II SM; in addition, via the port leading out from the negative pole of the capacitor contained therein, it is connected to the clamped diode of the voltage self-balancing auxiliary circuit, and also via the port leading out from the positive pole of the capacitor contained therein, connected to the interphase clamped diode of the voltage self-balancing auxiliary circuit.

Based on the technical solutions provided by this Invention as mentioned above, the embodiments of this Invention all have provided modular multilevel converter (MMC) topologies with voltage self-balancing capability that, has changed the characteristic of mutual independence among the SM capacitors, thus realizing the voltage balancing without relying on the voltage balancing control algorithm. Moreover, on basis of the completion of DC-AC energy conversion by MMC, the energy deviation among capacitors can be made to circulate within a phase or between phases, spontaneously realizing the voltage balancing of the SM capacitors, lowering SM triggering frequency and capacitor's capacitance and effectively overcoming the corresponding problems in the existing technologies.

**Brief Introduction to Drawings**

In order to explain more clearly the technical solutions of the embodiments of this Invention, below is the brief introduction to the drawings necessary for the description of the embodiments of this Invention. Obviously, the drawings described below show only some of the embodiments of this Invention. The common technicians in this field may obtain other drawings based on those attached hereto without creative work.

Figure 1 shows the schematic diagram of the topologic structure of the MMC provided by the embodiments of Approach 1;
Figure 2 shows the schematic diagram of the topologic structure of the MMC provided by the embodiments of Approach 2;
Figure 3 (a), (b) and (c) show the schematic diagram of the structure of the Category I SMs;
Figure 4(a), (b) and (c) show the schematic diagram of the structure of the Category II SMs;
Figure 5 (a), (b) and (c) shows the schematic diagram of the special SMs of Phases A and C in Approach 2;
Figure 6 (a), (b) and (c) show the schematic diagram of the special SM of Phases B in Approach 2;
Figure 7 shows the schematic diagram of the topologic structure of the Embodiment I provided by the embodiments of this Invention;
Figure 8 shows the schematic diagram of the topologic structure of the Embodiment II provided by the embodiments of this Invention.

**Detailed Description of the Preferred Embodiments**

Below is the clear and complete description of the technical solutions in the embodiments of this Invention; obviously, the described embodiments are only some of the embodiments of this Invention based on the drawings in the embodiments of this Invention. On basis of the embodiments of this Invention, any other embodiment obtained by any common technician in this field without creative work is protected by this Invention.

Below is the further detailed description of the embodiments of this Invention on basis of the drawings.

This Invention is to provide a series of economical novel MMC topologies with voltage self-balancing capability that do not rely on the voltage balancing control algorithm and simultaneously are capable of lowering SM(Sub module) triggering frequency and capacitor's capacitance.

The embodiments of this Invention provide a series of economical novel MMC topologies with voltage self-balancing capability that do not rely on the voltage balancing control algorithm and simultaneously are capable of lowering SM triggering frequency and capacitor's capacitance and the topologies consist of the Phase I module, Phase II module, Phase III module and the voltage self-balancing auxiliary circuit. Said Phase I module, Phase II module and Phase III module respectively consists of two bridge arms, each of which comprises N bridge arm SM(s). In Approach 1, said voltage self-balancing auxiliary circuit comprises $6N+5$ clamped diodes and two auxiliary capacitors ($C_1$ and $C_2$) and two auxiliary insulated gate bipolar transistor (IGBT) modules ($T_1$ and $T_2$); or, in Approach 2, said voltage self-balancing auxiliary circuit comprises $6N$-3 clamped diodes and 4 interphase clamped diodes.

In Approach 1, the SMs contained in said Phase I module and Phase III module are Category I SMs, which are connected to each other and also to the positive and negative poles of the DC bus, said Category I SMs, via the port leading out from the positive pole of the capacitor contained therein, are connected to said voltage self-balancing auxiliary circuit, the SMs contained in said Phase II module are the Category II SMs, which are connected to each other and also to the positive and negative poles of the DC bus, said Category II SMs, via the port leading out from the negative pole of the capacitor contained therein, are connected to said voltage self-balancing auxiliary circuit;

in Approach 2, except the first SM of upper bridge arm in Phase I module and Phase III module, which are the special SMs of Phases A and C, the rest SMs are Category I SMs, said Category I SMs, via the port leading out from the positive pole of the capacitor contained therein, are connected to said voltage self-balancing auxiliary circuit, except the last SM of lower bridge arm in Phase II module, which is the special SMs of Phases B, the rest SMs are Category II SMs, via the port leading out from the negative pole of the capacitor contained therein, are connected to said voltage self-balancing auxiliary circuit.

In both approaches, Category I SMs consist of half-bridge SMs, full-bridge SMs or single-clamped SMs, or the mixed SMs of such three. Category II SMs consist of half-bridge SMs, full-bridge SMs or single-clamped SMs, or the mixed SMs of such three. In Approach 2, the special SMs consist of half-bridge SM, full-bridge SM or single-clamped SM.

In said voltage self-balancing auxiliary circuit of Approach 1, the positive pole of one auxiliary capacitor $C_1$ is connected with one auxiliary IGBT module $T_1$ and its negative pole is connected with the clamped diode and the positive pole of the DC bus; the negative pole of the other auxiliary capacitor $C_2$ is connected with the other auxiliary IGBT module $T_2$ and its positive pole is connected with the clamped diode and the negative pole of the DC bus. The clamped diode is connected to the positive leading-out port of the first bridge arm SM capacitor and the positive poles of the two auxiliary capacitors $C_1$ and $C_2$, and also connected to the negative leading-out port of the second bridge arm SM capacitor and the negative poles of the two auxiliary capacitors $C_1$ and $C_2$

The triggering signals of said auxiliary IGBT module $T_1$ are consistent with the triggering signals of the first SM of upper bridge arm in the Phase I module and the Phase III module, the triggering signals of said auxiliary IGBT module $T_2$ are consistent with those of the triggering signals of the last SM of lower bridge arm in the Phase II module.

In Approach 2, the special SMs of Phases A and C, via the leading-out port, is connected to the Category I SM; in addition, via the leading out port from the positive pole of the capacitor contained therein, it is connected to the clamped diode of the voltage self-balancing auxiliary circuit, and also via the port leading out from the negative pole of the capacitor contained therein, connected to the interphase clamped diode of the voltage self-balancing auxiliary circuit. the special SM of Phases B, via the leading-out port, is connected to the negative pole of the DC bus, and also via the leading-out port, is connected to the Category II SM; in addition, via the port leading out from the negative pole of the capacitor contained therein, it is connected to the clamped diode of the voltage self-balancing auxiliary circuit, and also via the port leading out from the positive pole of the capacitor contained therein, connected to the interphase clamped diode of the voltage self-balancing auxiliary circuit.

For convenience of understanding the specific embodiments of this Invention, below is the detailed description of the specific realization of the embodiments of this Invention.

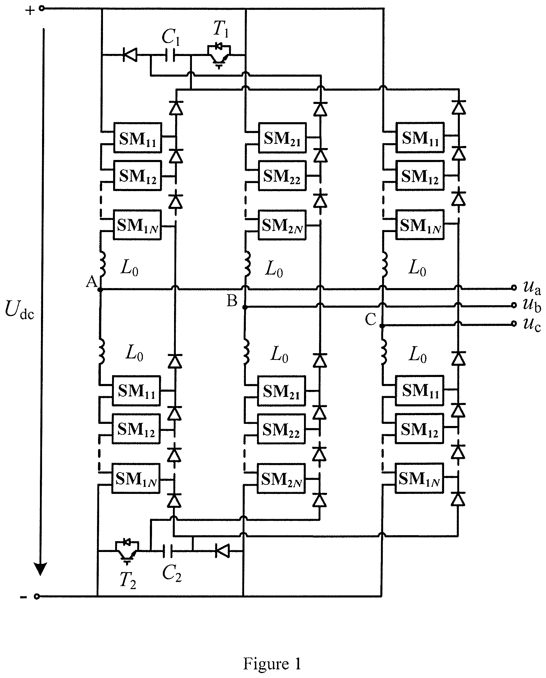

As shown in Figure 1, Approach 1 provided by the embodiments of this Invention may consist of Phases A, B and C (i.e. Phase I module, Phase II module and Phase III module) and the voltage self-balancing auxiliary circuit connected thereto; the voltage self-balancing auxiliary circuit may mainly consist of $6N+5$ clamped diodes ($N$ is the number of the SMs), 2 auxiliary capacitors $C_1$, $C_2$ and 2 auxiliary IGBT modules $T_1$, $T_2$.

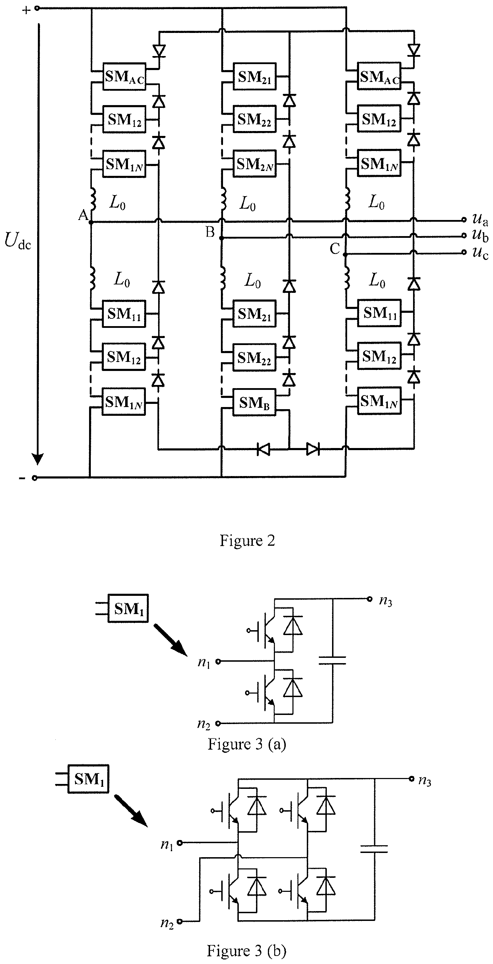

As shown in Figure 2, Approach 2 provided by the embodiments of this Invention may consist of the Phases A, B and C and the voltage self-balancing auxiliary circuit connected thereto. Said Phases A, B and C respectively consists of two bridge arms, each of which comprises N SMs, among which, $6N-3$ are Category I SMs while the other three are special SMs. And said voltage self-balancing auxiliary circuit comprises $6N-3$ clamped diodes and 4 interphase clamped diodes.

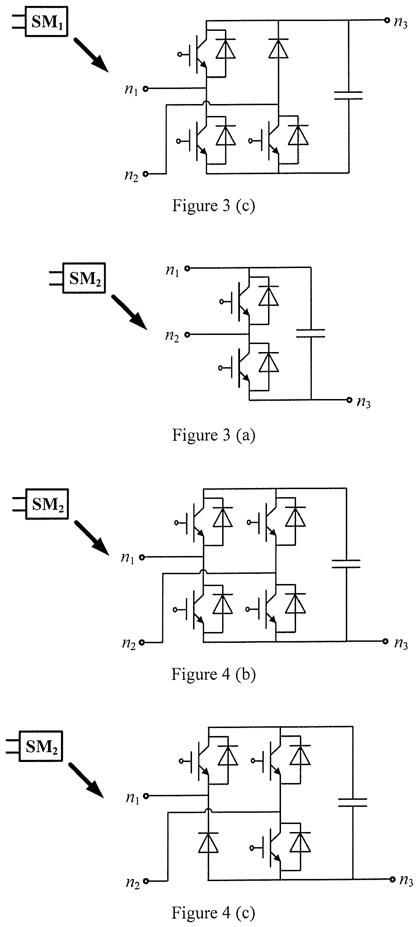

As shown in Figure 3 (a), (b), (c) (i.e. Figure 3 (a), Figure 3 (b) and Figure3 (c)), the SMs $SM_{1i}$, (called Category I SMs) of Phase A and Phase C $(i=1\sim N)$ may consist of half-bridge SMs, full-bridge SMs and single-clamped SMs or the mixed SMs of such three; the corresponding Category I SMs may be connected to each other and the positive and negative poles of the DC bus via the conventional ports $n_1$ and $n_2$ as shown in Figure 3 (a), (b), (c), and also may be connected to the voltage self-balancing auxiliary circuit via the port $n_3$ leading out from the positive pole of the SM capacitor.

As shown in Figure 4(a), (b), (c), the SMs $SM_{2i}$ (called Category II SMs) of Phase B $(i=1\sim N)$ may consist of half-bridge SMs, full-bridge SMs and single-clamped SMs or the mixed SMs of such three; the corresponding Category II SMs, with different the port leading-out line from that of Category I SMs, may be connected to each other and the positive and negative poles of the DC bus via the corresponding conventional ports $n_1$ and $n_2$ as shown in Figure 4(a), (b), (c), and also may be connected to the voltage self-balancing auxiliary circuit via the port $n_3$ leading out from the negative pole of the SM capacitor.

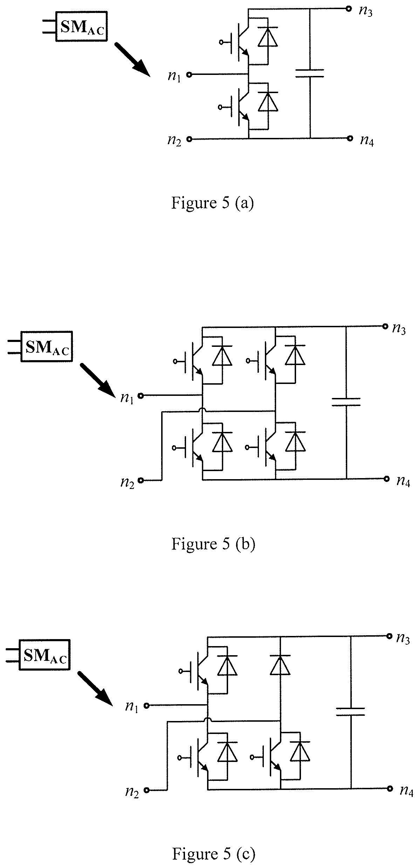

As shown in Figure 5 (a), (b), (c), the first SM of upper bridge arm in the Phase A and the Phase C are the special SMs of Phases A and C $SM_{AC}$, may consist of half-bridge SMs, full-bridge SMs and single-clamped SMs, and said special SMs of Phases A and C $SM_{AC}$, via the leading-out port $n_1$, are connected to the positive pole of the DC bus, and also via the leading-out port $n_2$, are connected to the Category I SM; in addition, via the positive leading-out port $n_3$ of the capacitor contained therein, they are connected to the clamped diode of the voltage self-balancing auxiliary circuit, and also via the negative leading-out port $n_4$ of the capacitor contained therein, connected to the interphase clamped diode of the voltage self-balancing auxiliary circuit.

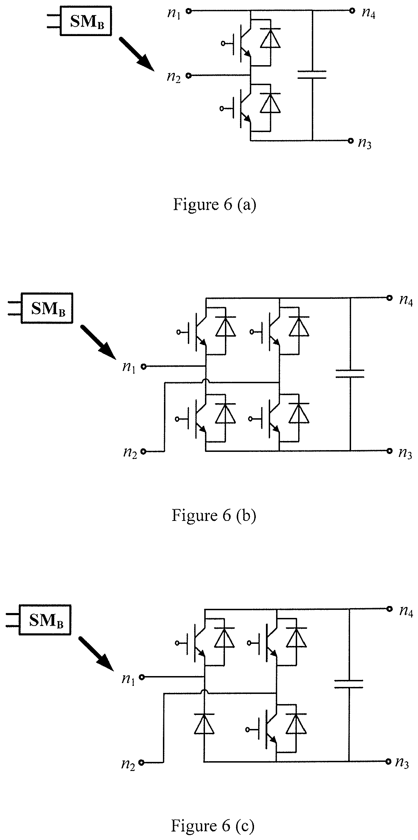

As shown in Figure 6 (a), (b), (c), the last SM of lower bridge arm in the Phase B is the special SM of Phases B $SM_B$, may consist of half-bridge SM, full-bridge SM and single-clamped SM, and said special SM of Phases B $SM_B$, via the leading-out port $n_2$, is connected to the negative pole of the DC bus, and also via the leading-out port $n_1$, is connected to the Category II SM; in addition, via the negative leading-out port $n_3$ of the capacitor contained therein, it is connected to the clamped diode of the voltage self-balancing auxiliary circuit, and also via the positive leading-out port $n_4$ of the capacitor contained therein, connected to the interphase clamped diode of the voltage self-balancing auxiliary circuit.

In Approach 1, the positive pole of one auxiliary capacitor $C_1$ is connected with one auxiliary IGBT module $T_1$ and its negative pole is connected with the clamped diode and the positive pole of the DC bus; the negative pole of the other auxiliary capacitor $C_2$ is connected with the other auxiliary IGBT module $T_2$ and its positive pole is connected with the clamped diode and the negative pole of the DC bus. The clamped diode is connected to the positive poles of the Category I SM capacitor and the auxiliary capacitors $C_1$, $C_2$, via the port $n_3$ as shown in Figure 2(a), (b), (c) and also connected to the negative poles of the Category II SM capacitor and the auxiliary capacitors $C_1$ and $C_2$. As shown in Figure 1, the triggering signals of said auxiliary IGBT module $T_1$ are consistent with the triggering signals of the first SM of upper bridge arm in the Phase I module and the Phase III module, the triggering signals of said auxiliary IGBT module $T_2$ are consistent with those of the triggering signals of the last SM of lower bridge arm in the Phase II module.

In Approach 2, the leading-out port $n_4$ of the special SMs of Phases A and C $SM_{AC}$ is connected with the leading-out port $n_3$ of the first SM of upper bridge arm in Phase B via the interphase clamped diode; and the leading-out port $n_4$ of the special SM of Phases B $SM_B$ is connected with the leading-out port $n_3$ of the last SM of lower bridge arm in Phases A and C via the interphase clamped diode.

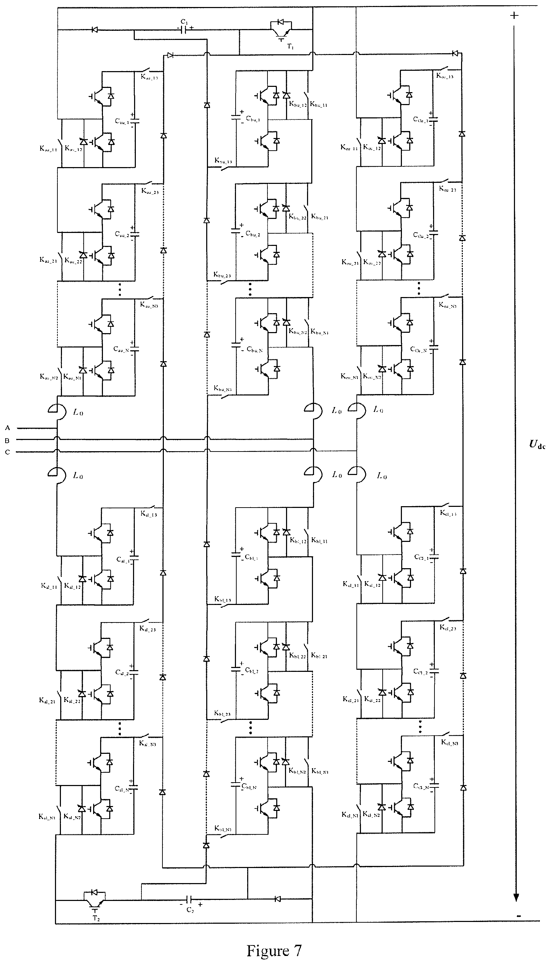

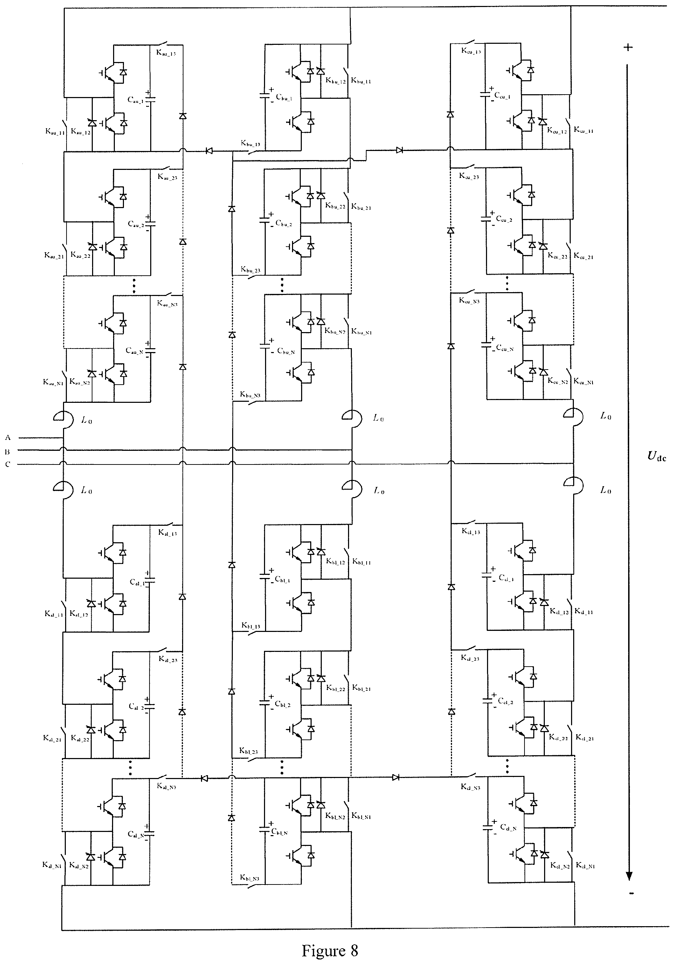

In the specific implementation process of this Invention, particularly, the topologic structure as shown in Figure 7 or Figure 8 may be adopted. Below is the description of the realization of the MMC provided by the embodiments of this Invention on basis of Figure 7 and Figure 8.


**Embodiment I**

**As shown in Figure 7**, Approach 1 provided by the embodiments of this Invention is the auxiliary capacitor-intensive half-bridge MMC voltage self-balancing topologic structure based on equality constraint that may consist of the half-bridge model constituted by Phases A, B and C (the specific layout locations of which are as shown in Figure 1), and every bridge arm of which respectively comprises $N$ half-bridge SM(s) and 1 bridge arm reactor connected in series and the voltage self-balancing auxiliary circuit made up of $6N$ mechanical switches, $6N+5$ clamped diodes, 2 auxiliary capacitors and 2 auxiliary IGBT modules.

In the half-bridge MMC model, of the first SM of the upper bridge arm of Phase A (i.e. the half-bridge SM, hereinafter referred to as "SM" in such Embodiment II), the SM capacitor $C_{au\_1}$ has the negative pole downward and connected with the midpoint of IGBT module of the second SM in the upper bridge arm of Phase A and its IGBT module has the midpoint upward and connected with the positive pole of the DC bus. Of the $i$-th SM of the upper bridge arm of Phase A ($i=2\sim N-1$), the SM capacitor $C_{au\_i}$ has the negative pole downward and connected with the midpoint of the IGBT module of the $i+1$-th SM of the upper bridge arm of Phase A and its IGBT module has the midpoint upward and connected with the negative pole of the $i-1$ SM capacitor $C_{au\_i-1}$ of the upper bridge arm of Phase A. Of the $N$-th SM of the upper bridge arm of Phase A, the SM capacitor $C_{au\_N}$ has the negative pole downward and, via two bridge arm reactors $L_0$, connected with the midpoint of the IGBT module of the first SM of the lower bridge arm of Phase A and its IGBT module has the midpoint upward and connected with the negative pole of the capacitor $C_{au\_N-1}$ of the $N-1$-th SM of the upper bridge arm of Phase A Of the $i$-th SM of the lower bridge arm of Phase A ($i=2\sim N-1$), the SM capacitor $C_{al\_i}$ has the negative pole downward and connected with the midpoint of the IGBT module of the $i+1$-th SM of the lower bridge arm of Phase A and its IGBT module has the midpoint upward and connected with the negative pole of the capacitor $C_{al\_i-1}$ of the $i-1$-th SM of the lower bridge arm of Phase A. Of the $N$-th SM of the lower bridge arm of Phase A, the SM capacitor $C_{al\_N}$ has the negative pole downward and connected with the negative pole of the DC bus and its IGBT module has the midpoint upward and connected with the negative pole of the capacitor $C_{al\_N-1}$ of the $N-1$-th SM of the lower bridge arm of Phase A. Of the first SM of the upper bridge arm of Phase B, the SM capacitor $C_{bu\_1}$ has the positive pole upward and connected with the positive pole of the DC bus and its IGBT module has the midpoint downward and connected with the positive pole of the capacitor $C_{bu\_2}$ of the second SM. Of the $i$-th SM of the upper bridge arm of Phase B ($i=2\sim N-1$), the SM capacitor $C_{bu\_i}$ has the positive pole upward and connected with the midpoint of the IGBT module of the $i-1$-th SM of the upper bridge arm of Phase B and its IGBT module has the midpoint downward and connected with the positive pole of the $i+1$-th SM capacitor $C_{bu\_i+1}$ of the upper bridge arm of Phase B. Of the $N$-th SM of the upper bridge arm of Phase B, the SM capacitor $C_{bu\_N}$ has the positive pole upward and connected with the midpoint of the IGBT module of the $N-1$-th SM of the upper bridge arm of Phase B and its IGBT module has the midpoint downward and, via two bridge arm reactors $L_0$, connected with the positive pole of the capacitor $C_{bl\_l}$ of the first SM of the lower bridge arm of Phase B. Of the $i$-th SM of the lower bridge arm of Phase B ($i=2\sim N-1$), the SM capacitor $C_{bl\_i}$ has the positive pole upward and connected with the midpoint of the IGBT module of the $i-1$-th SM of the lower bridge arm of Phase B and its IGBT module has the midpoint downward and connected with the positive pole of the $i+1$ SM capacitor $C_{bl\_i+1}$ of the lower bridge arm of Phase B. Of the $N$-th SM of the lower bridge arm of Phase B, the SM capacitor $C_{bl\_N}$ has the positive pole upward and connected with the midpoint of the IGBT module of the $N-1$-th SM of the lower bridge arm of Phase B and its IGBT module has the midpoint downward and connected with the negative pole of the DC bus. The connection mode for the upper and lower SMs of Phase C is the same as that of Phase A.

In the voltage self-balancing auxiliary circuit, the positive pole of one auxiliary capacitor $C_1$ is connected with one auxiliary IGBT module $T_1$ and its negative pole is connected with the clamped diode and the positive pole of the DC bus; the negative pole of the other auxiliary capacitor $C_2$ is connected with the other auxiliary IGBT module $T_2$ and its positive pole is connected with the clamped diode and the negative pole of the DC bus. The clamped diode is connected with the positive pole of the capacitor $C_{au\_1}$ of the first SM and the auxiliary capacitor $C_1$ in the upper bridge arm of Phase A via the mechanical switch $K_{au\_13}$; connected with the positive pole of the capacitor $C_{au\_i}$ of the $i$-th SM and the capacitor $C_{au\_i+1}$ of the $i+1$-th SM in the upper bridge arm of Phase A ($i=1\sim N-1$), via the mechanical switches $K_{au\_i3}$ and $K_{au\_(i+1)3}$, connected with positive pole of the capacitor $C_{au\_N}$ of the $N$-th SM in the upper bridge arm of Phase A and the capacitor $C_{al\_1}$ of the first SM in the lower bridge arm of Phase A via the mechanical switches $K_{au\_N3}$ and $K_{al\_13}$, connected with positive pole of the capacitor $C_{al\_i}$ of the $i$-th SM in the lower bridge arm of Phase A and the capacitor $C_{al\_i+1}$ of the $i+1$-th SM in the lower bridge arm of Phase A via the mechanical switches $K_{al\_i3}$ and $K_{al\_(i+1)3}$ ($i=1\sim N-1$), and connected to the positive pole of the capacitor $C_{al\_N}$ of the $N$-th module and the auxiliary capacitor $C_2$ in the lower bridge arm of Phase A via the mechanical switch $K_{al\_N3}$. The clamped diode is connected with the negative pole of the capacitor $C_{bu\_1}$ of the first SM and the auxiliary capacitor $C_1$ in the upper bridge arm of Phase B via the mechanical switch $K_{bu\_13}$, connected with the negative pole of the capacitor $C_{bu\_i}$ of the $i$-th SM and the capacitor $C_{bu\_i+1}$ of the $i+1$-th SM in the upper bridge arm of Phase B ($i=1\sim N-1$) via the mechanical switches $K_{bu\_i3}$ and $K_{bu\_(i+1)3}$, connected with negative pole of the capacitor $C_{bu\_N}$ of the $N$-th SM in the upper bridge arm of Phase B and the capacitor $C_{bl\_1}$ of the first SM in the lower bridge arm of Phase B via the mechanical switches $K_{bu\_N3}$ and $K_{bl\_13}$, connected with negative pole of the capacitor $C_{bl\_i}$ of the $i$-th SM in the lower bridge arm of Phase B and the capacitor $C_{bl\_i+1}$ of the $i+1$-th SM in the lower bridge arm of Phase B via the mechanical switches $K_{bl\_i3}$ and $K_{bl\_(i+1)3}$ ($i=1\sim N-1$), and connected with the negative pole of the capacitor $C_{bl\_N}$ of the N-th SM and the auxiliary capacitor $C_2$ in the lower bridge arm of Phase B via the mechanical switch $K_{bl\_N3}$. The connection of the clamped diode for Phase C is the same as that of Phase A.

The $6N$ mechanical switches, i.e. $K_{au\_i3}$, $K_{al\_i3}$, $K_{bu\_i3}$, $K_{bl\_i3}$, $K_{cu\_i3}$ and $K_{cl\_i3}$ in the voltage self-balancing auxiliary circuit are normally closed ($i=1\sim N$). When the capacitor $C_{au\_1}$ of the first SM in the upper bridge arm of Phase A is bypass, the auxiliary IGBT module $T_1$ is disengaged and the SM capacitor $C_{au\_i}$ and the auxiliary capacitor $C_1$ are connected in parallel via the clamped diode; when the capacitor $C_{au\_1}$ of the $i$-th SM in the upper bridge arm of Phase A is bypass ($i=2\sim N$), the SM capacitor $C_{au\_i}$ and the SM capacitor $C_{au\_i-1}$ are connected in parallel via the clamped diode; when the capacitor $C_{al\_1}$ of the first SM in the lower bridge arm of Phase A is bypass, the SM capacitor $C_{al\_1}$ and the SM capacitor $C_{au\_N}$ are connected in parallel via the clamped diode and the two bridge arm reactors $L_0$; when the

capacitor $C_{al\_i}$ of the $i$-th SM in the lower bridge arm of Phase A is bypass ($i=2{\sim}N$), the SM capacitor $C_{al\_i}$ and the SM capacitor $C_{al\_i-1}$ are connected in parallel via the clamped diode; when the auxiliary IGBT module $T_2$ is engaged, the auxiliary capacitor $C_2$ and the SM capacitor $C_{al\_N}$ are connected in parallel via the clamped diode .

The $6N$ mechanical switches, i.e. $K_{au\_i3}$, $K_{al\_i3}$, $K_{bu\_i3}$, $K_{bl\_i3}$, $K_{cu\_i3}$ and $K_{cl\_i3}$ in the voltage self-balancing auxiliary circuit are normally closed ($i=1{\sim}N$). When the auxiliary IGBT module $T_1$ is engaged, the auxiliary capacitor $C_1$ and the SM capacitor $C_{bu\_1}$ are connected in parallel via the clamped diode; when the capacitor $C_{bu\_i}$ of the $i$-th SM in the upper bridge arm of Phase B is bypass ($i=1{\sim}N-1$), the SM capacitor $C_{bu\_i}$ and the SM capacitor $C_{bu\_i+1}$ are connected in parallel via the clamped diode; when the capacitor $C_{bu\_N}$ of the $N$-th SM in the upper bridge arm of Phase B is bypass, the SM capacitor $C_{bu\_N}$ and the SM capacitor $C_{bl\_1}$ are connected in parallel via the clamped diode and the two bridge arm reactors $L_0$; when the capacitor $C_{bl\_i}$ of the $i$-th SM in the lower bridge arm of Phase B is bypass ($i=1{\sim}N-1$), the SM capacitor $C_{bl\_i}$ and the SM capacitor $C_{bl\_i+1}$ are connected in parallel via the clamped diode; and when the capacitor $C_{bl\_N}$ of the $N$-th SM in the lower bridge arm of Phase B is bypass, the SM capacitor $C_{bl-N}$ and the auxiliary capacitor $C_2$ are connected in parallel.

The triggering signals of the above auxiliary IGBT module $T_1$ are consistent with those of the first sub-modules SMs of the upper bridge arm of Phase A and Phase C in "logic sum"; and the triggering signals of the auxiliary IGBT module $T_2$ are consistent with those of the $N$-th SM of the second bridge arm on the lower bridge arm of the Phase B. In the process of DC-AC conversion, every SM is engaged and bypass alternately; and the auxiliary IGBT modules $T_1$ and $T_2$ are engaged and disengaged alternately. The capacitor voltage of the upper and lower bridge SMs of Phase A and Phase B, under the action of the clamped diode, meets the following constraint:

$$U_{C1}{\geq}U_{Cau\_1}{\geq}U_{Cau\_2}{\ldots}{\geq}U_{Cau\_N}{\geq}U_{Cal\_1}{\geq}U_{Cal\_2}{\ldots}{\geq}U_{Cal\_N}{\geq}U_{C2}$$

$$U_{C1}{\leq}U_{Cbu\_1}{\leq}U_{Cbu\_2}{\ldots}{\leq}U_{Cbu\_N}{\leq}U_{Cbl\_1}{\leq}U_{Cbl\_2}{\ldots}{\leq}U_{Cbl\_N}{\leq}U_{C2}$$

Therefore, in the dynamic process of completing DC-AC energy conversion, the half-bridge MMC meets the following constraint condition:

$$U_{C1}{=}\,U_{Cau\_1}{\ldots}{=}U_{Cau\_N}{=}U_{Cal\_1}{\ldots}{=}U_{Cal\_N}{=}U_{Cbu\_1}{\ldots}{=}U_{Cbu\_N}{=}U_{Cbl\_1}{\ldots}{=}U_{Cbl\_N}{=}U_{C2}$$

The constraint condition between Phase C and Phase B is consistent with that between Phase A and Phase B.

According to the above detailed description, this half-bridge MMC topology has the capability of SM capacitor voltage self-balancing.

## Embodiment II

**As shown in Figure 8**, Approach 2 provided by the embodiments of this Invention is the auxiliary capacitor-free half-bridge MMC voltage self-balancing topologic structure based on inequality constraint that may consist of the half-bridge MMC model constituted by Phases A, B and C (the specific layout locations of which are as shown in Figure 1), and every bridge arm of which respectively comprises N half-bridge SMs and 1 bridge arm reactor connected in series and $6N$ mechanical switches and $6N+1$ clamped diodes.

In the half-bridge MMC model, of the first SM of the upper bridge arm of Phase A (i.e. the half-bridge SM, hereinafter referred to as "SM" in such Embodiment II), the SM capacitor $C_{au\_1}$ has the negative pole downward and connected with the midpoint of IGBT module of the 2$^{nd}$ SM in the upper bridge arm of Phase A and its IGBT module has the midpoint upward and connected with the positive pole of the DC bus. Of the $i$-th SM of the upper bridge arm of Phase A ($i=2{\sim}N-1$), the SM capacitor $C_{au\_i}$ has the negative pole downward and connected with the midpoint of the IGBT module of the $i+1$-th SM of the upper bridge arm of Phase A and its IGBT module has the midpoint upward and connected with the negative pole of the $i-1$ SM capacitor $C_{au\_i-1}$ of the upper bridge arm of Phase A. Of the $N$-th SM of the upper bridge arm of Phase A, the SM capacitor $C_{au\_N}$ has the negative pole downward and, via two bridge arm reactors $L_0$, connected with the midpoint of the IGBT module of the first SM of the lower bridge arm of Phase A and its IGBT module has the midpoint upward and connected with the negative pole of the capacitor $C_{-au\_N-1}$ of the $N$-1-th SM of the upper bridge arm of Phase A. Of the $i$-th SM of the lower bridge arm of Phase A ($i=2{\sim}N-1$), the SM capacitor $C_{al\_i}$ has the negative pole downward and connected with the midpoint of the IGBT module of the $i+1$-th SM of the lower bridge arm of Phase A and its IGBT module has the midpoint upward and connected with the negative pole of the capacitor $C_{al\_i-1}$ of the $i$-1-th SM of the lower bridge arm of Phase A. Of the $N$-th SM of the lower bridge arm of Phase A, the SM capacitor $C_{al\_N}$ has the negative pole downward and connected with the negative pole of the DC bus and its IGBT module has the midpoint upward and connected with the negative pole of the capacitor $C_{al\_N-1}$ of the $N$-1-th SM of the lower bridge arm of Phase A. Of the first SM of the upper bridge arm of Phase B, the SM capacitor $C_{bu\_1}$ has the positive pole upward and connected with the positive pole of the DC bus and its IGBT module has the midpoint downward and connected with the positive pole of the capacitor $C_{bu\_2}$ of the second SM. Of the $i$-th SM of the upper bridge arm of Phase B ($i=2\sim N$-1), the SM capacitor $C_{bu\_i}$ has the positive pole upward and connected with the midpoint of the IGBT module of the $i$+1-th SM of the upper bridge arm of Phase B and its IGBT module has the midpoint downward and connected with the positive pole of the $i$+1 SM capacitor $C_{bu\_i-1}$ of the upper bridge arm of Phase B. Of the $N$-th SM of the upper bridge arm of Phase B, the SM capacitor $C_{bu\_N}$ has the positive pole upward and connected with the midpoint of the IGBT module of the $N$-1-th SM of the upper bridge arm of Phase B and its IGBT module has the midpoint downward and, via two bridge arm reactors $L_0$, connected with the positive pole of the capacitor $C_{bl\_1}$ of the *first* SM of the lower bridge arm of Phase B. Of the $i$-th SM of the lower bridge arm of Phase B ($i=2\sim N$-1), the SM capacitor $C_{bl\_i}$ has the positive pole upward and connected with the midpoint of the IGBT module of the $i$-1-th SM of the lower bridge arm of Phase B and its IGBT module has the midpoint downward and connected with the positive pole of the $i$+1 SM capacitor $C_{bl\_i+1}$ of the lower bridge arm of Phase B. Of the $N$-th SM of the lower bridge arm of Phase B, the SM capacitor $C_{bl-\_N}$ has the positive pole upward and connected with the midpoint of the IGBT module of the $N$-1-th SM of the lower bridge arm of Phase B and its IGBT module has the midpoint downward and connected with the negative pole of the DC bus. The connection mode for the upper and lower bridge arm SMs of Phase C is the same as that of Phase A.

In the voltage self-balancing auxiliary circuit, the clamped diode is connected with the positive pole of the capacitor $C_{au\_i}$ of the $i$-th SM and the capacitor $C_{au\_i+1}$ of the $i$+1-th SM in the upper bridge arm of Phase A ($i=1\sim N$-1) via the mechanical switches $K_{au\_i3}$ and $K_{au\_(i+1)3}$, connected with positive pole of the capacitor $C_{au\_N}$ of the $N$-th SM in the upper bridge arm of Phase A and the capacitor $C_{al\_1}$ of the *first* SM in the lower bridge arm of Phase A via the mechanical switches $K_{au\_N3}$ and $K_{al\_13}$, and connected with positive pole of the capacitor $C_{al\_i}$ of the $i$-th SM in the lower bridge arm of Phase A and the capacitor $C_{al\_i+1}$ of the $i$+1-th SM in the lower bridge arm of Phase A via the mechanical switches $K_{al\_i3}$ and $K_{al\_(i+1)3}$ ($i=1\sim N$-1). The clamped diode is connected with the negative pole of the capacitor $C_{bu\_i}$ of the $i$-th SM and the capacitor $C_{bu\_i+1}$ of the $i$+1-th SM in the upper bridge arm of Phase B ($i=1\sim N$-1) via the mechanical switches $K_{bu\_i3}$ and $K_{bu\_(i+1)3}$, connected with negative pole of the capacitor $C_{bu\_N}$ of the $N$-th SM in the upper bridge arm of Phase B and the capacitor $C_{bl\_1}$ of the first SM in the lower bridge arm of Phase B via the mechanical switches $K_{bu\_N3}$ and $K_{bl\_13}$ and connected with negative pole of the capacitor $C_{bl\_i}$ of the $i$-th SM in the lower bridge arm of Phase B and the capacitor $C_{bl\_i+1}$ of the $i$+1-th SM in the lower bridge arm of Phase B via the mechanical switches $K_{bl\_i3}$ and $K_{bl\_(i+1)3}$ ($i=1\sim N$-1). In addition, the clamped diode is connected with the negative pole of the capacitor $C_{au\_1}$ of the first SM in the upper bridge arm of Phase A and the capacitor $C_{bu\_1}$ of the first SM in the upper bridge arm of Phase B via the mechanical switch $K_{bu\_13}$, and connected with the positive pole of the capacitor $C_{al\_N}$ of the $N$-th SM in the lower bridge arm of Phase A and the capacitor $C_{bl\_N}$ of the $N$-th SM in the lower bridge arm of Phase B via the mechanical switch $K_{al\_N3}$. The connection of the clamped diode for Phase C is the same as that of Phase A.

The *6N* mechanical switches, i.e. $K_{au\_i3}$, $K_{al\_i3}$, $K_{bu\_i3}$, $K_{bl\_i3}$, $K_{cu\_i3}$ and $K_{cl\_i3}$ in the voltage self-balancing auxiliary circuit are normally closed ($i=1\sim N$). When the capacitor $C_{au\_i}$ of the $i$-th SM in the upper bridge arm of Phase A is bypass ($i=2\sim N$), the SM capacitor $C_{au\_i}$ and the SM capacitor $C_{au\_i-1}$ are connected in parallel via the clamped diode; when the capacitor $C_{al\_1}$ of the first SM in the lower bridge arm of Phase A is bypass, the SM capacitor $C_{al\_1}$ and the SM capacitor $C_{au\_N}$ are connected in parallel via the clamped diode and the two bridge arm reactors Lo; when the capacitor $C_{al\_i}$ of the $i$-th SM in the lower bridge arm of Phase A is bypass ($i=2\sim N$), the SM capacitor $C_{al\_i}$ and the SM capacitor $C_{al\_i-1}$ are connected in parallel via the clamped diode.

The *6N* mechanical switches, i.e. $K_{au\_i3}$, $K_{al\_i3}$, $K_{bu\_i3}$, $K_{bl\_i3}$, $K_{cu\_i3}$ and $K_{cl\_i3}$ in the voltage self-balancing auxiliary circuit are normally closed ($i=1\sim N$). When the capacitor $C_{bu\_i}$ of the $i$-th SM in the upper bridge arm of Phase B is bypass ($i=1\sim N$-1), the SM capacitor $C_{bu\_i}$ and the SM capacitor $C_{bu\_i+1}$ are connected in parallel via the clamped diode; when the capacitor $C_{bu\_N}$ of the $N$-th SM in the upper bridge arm of Phase B is bypass, the SM capacitor $C_{bu\_N}$ and the SM capacitor $C_{bl\_1}$ are connected in parallel via the clamped diode and the two bridge arm reactors $L_0$; when the capacitor $C_{bl\_i}$ of the $i$-th SM in the lower bridge arm of Phase B is bypass ($i=1\sim N$-1), the SM capacitor $C_{bl\_i}$ and the SM capacitor $C_{bl\_i+1}$ are connected in parallel via the clamped diode.

In the process of DC-AC conversion, every SM is engaged and bypass alternately. The capacitor voltage of the upper and lower bridge SMs of Phase A and Phase B, under the action of the clamped diode, meets the following constraint:

$$U_{Cau\_1} \geq U_{Cau\_2} \ldots \geq U_{Cau\_N} \geq U_{Cal\_1} \geq U_{Cal\_2} \ldots \geq U_{Cal\_N}$$

$$U_{C\mathrm{bu}\_1} \leq U_{C\mathrm{bu}\_2} \ldots \leq U_{C\mathrm{bu}\_N} \leq U_{C\mathrm{bl}\_1} \leq U_{C\mathrm{bl}\_2} \ldots \leq U_{C\mathrm{bl}\_N}$$

Relying on the two clamped diodes between Phases A and B, in the auxiliary capacitor-free half-bridge MMC voltage self-balancing topologic structure based on inequality constraint, the following inequality constraint exists between the voltages of the SM capacitor $C_{\mathrm{au}\_1}$ and the SM capacitor $C_{\mathrm{bu}\_1}$, as well as between the voltages of the SM capacitor $C_{\mathrm{al}\_N}$ and the SM capacitor $C_{\mathrm{bl}\_N}$:

$$U_{C\mathrm{au}\_1} \leq U_{C\mathrm{bu}\_1} \qquad U_{C\mathrm{al}\_N} \geq U_{C\mathrm{bl}\_N}$$

Therefore, in the dynamic process of completing DC-AC energy conversion, the half-bridge MMC meets the following constraint condition:

$$U_{C\mathrm{au}\_1} \ldots = U_{C\mathrm{au}\_N} = U_{C\mathrm{al}\_1} \ldots = U_{C\mathrm{al}\_N} = U_{C\mathrm{bu}\_1} \ldots = U_{C\mathrm{bu}\_N} = U_{C\mathrm{bl}\_1} \ldots = U_{C\mathrm{bl}\_N}$$

The constraint condition between Phase C and Phase B is consistent with that between Phase A and Phase B.

According to the above detailed description, this half-bridge MMC topology has the capability of SM capacitor voltage self-balancing.

It should be noted that, in the specific implementation process, the topologic structures of the embodiments of this Invention are not limited to those shown in Figure 1 through Figure 8 above, namely, the embodiments described in Figure 1 through Figure 8 are only some of the embodiments of this Invention.

The above are only the preferred embodiments of this Invention but not limited thereto. Any change or replacement that may be imagined easily by any technician skilled in the art within the technical scope of this Invention shall be covered within the protection scope of this Invention. Therefore, the protection scope of this Invention shall be subject to that required in the Claims.

## Claims

1. Modular multilevel converter (MMC) topologies, comprising: a Phase I module forming a first phase A, a Phase II module forming a second phase B, a Phase III module forming a third phase C, and a voltage self-balancing auxiliary circuit, said Phase I module, Phase II module and Phase III module respectively comprise two bridge arms, each of which comprises $N$ bridge arm submodules SMs, wherein the SMs comprise category I SMs, category II SMs and special SMs; In a first topology, said voltage self-balancing auxiliary circuit comprises $6N+5$ clamped diodes and two auxiliary capacitors ($C_1$ and $C_2$) and two auxiliary insulated gate bipolar transistor (IGBT) modules ($T_1$ and $T_2$); or, in a second topology, said voltage self-balancing auxiliary circuit comprises $6N-3$ clamped diodes and 4 interphase clamped diodes, **characterized in that** the modular multilevel converter (MMC) topologies have voltage self-balancing capability, wherein, in the first topology, the SMs contained in said Phase I module and Phase III module are Category I SMs, which are connected to each other and also to the positive and negative poles of the DC bus, said Category I SMs, via the port leading out from the positive pole of the capacitor contained therein, are connected to said voltage self-balancing auxiliary circuit, the SMs contained in said Phase II module are the Category II SMs, which are connected to each other and also to the positive and negative poles of the DC bus, said Category II SMs, via the port leading out from the negative pole of the capacitor contained therein, are connected to said voltage self-balancing auxiliary circuit;
or, in the second topology, except the first SMs of upper bridge arm in Phase I module and Phase III module, which are the special SMs of Phases A and C, the rest SMs are Category I SMs, said Category I SMs, via the port leading out from the positive pole of the capacitor contained therein, are connected to said voltage self-balancing auxiliary circuit, except the last SM of lower bridge arm in Phase II module, which is the special SM of Phase B, the rest SMs are Category II SMs, via the port leading out from the negative pole of the capacitor contained therein, are connected to said voltage self-balancing auxiliary circuit.

2. Modular multilevel converter (MMC) topologies according to claim 1, comprising: the Phase I module, Phase II module, Phase III module and the voltage self-balancing auxiliary circuit, said Phase I module, Phase II module and Phase III module respectively comprise two bridge arms, each of which comprise $N$ bridge arm submodules (SMs); In a first topology, said voltage self-balancing auxiliary circuit comprises $6N+5$ clamped diodes and two auxiliary

capacitors ($C_1$ and $C_2$) and two auxiliary insulated gate bipolar transistor (IGBT) modules ($T_1$ and $T_2$); or, in a second topology, said voltage self-balancing auxiliary circuit comprises $6N$-3 clamped diodes and 4 interphase clamped diodes, **characterized in that** the modular multilevel converter (MMC) topologies has voltage self-balancing capability, wherein, in both topologies, Category I SMs comprise half-bridge SMs, full-bridge SMs or single-clamped SMs, or the mixed SMs of such three, Category II SMs comprise half-bridge SMs, full-bridge SMs or single-clamped SMs, or the mixed SMs of such three, in a second topology, the special SMs comprise half-bridge SM, full-bridge SM or single-clamped SM.

**3.** Modular multilevel converter (MMC) topologies according to anyone of the preceding claims, comprising: the Phase I module, Phase II module, Phase III module and the voltage self-balancing auxiliary circuit, said Phase I module, Phase II module and Phase III module respectively comprise two bridge arms, each of which comprise N bridge arm submodules (SMs); In a first topology, said voltage self-balancing auxiliary circuit comprises $6N$+5 clamped diodes and two auxiliary capacitors ($C_1$ and $C_2$) and two auxiliary insulated gate bipolar transistor (IGBT) modules ($T_1$ and $T_2$); or, in a second topology, said voltage self-balancing auxiliary circuit comprises $6N$-3 clamped diodes and 4 interphase clamped diodes, **characterized in that** the modular multilevel converter (MMC) topologies has voltage self-balancing capability, wherein,
in a first topology, the positive pole of one auxiliary capacitor ($C_1$) is connected with one auxiliary IGBT module ($T_1$) and its negative pole is connected with the clamped diode and the positive pole of the DC bus, the negative pole of the other auxiliary capacitor ($C_2$) is connected with the other auxiliary IGBT module ($T_2$) and its positive pole is connected with the clamped diode and the negative pole of the DC bus, the clamped diode is connected to the positive leading-out port of the Category I SM capacitor and the positive poles of the two auxiliary capacitors ($C_1$ and $C_2$), and also connected to the negative leading-out port of the Category II SM capacitor and the negative poles of the two auxiliary capacitors ($C_1$ and $C_2$),
or,
in a second topology, the clamped diode is connected to the positive leading-out port of the Category I SM capacitor, and also connected to the negative leading-out port of the Category II SM capacitor, the leading-out port of the special SMs of Phases A and C $SM_{AC}$ is connected with the leading-out port of the first SMs of upper bridge arm in Phase B via the interphase clamped diode, and the leading-out port of the special SM of Phases B $SM_B$ is connected with the leading-out port of the last lower bridge arm SM in Phases A and C via the interphase clamped diode.

**4.** Modular multilevel converter (MMC) topologies according to anyone of the preceding claims, comprising: the Phase I module, Phase II module, Phase III module and the voltage self-balancing auxiliary circuit, said Phase I module, Phase II module and Phase III module respectively comprise two bridge arms, each of which comprise $N$ bridge arm submodules (SMs); In a first topology, said voltage self-balancing auxiliary circuit comprises $6N$+5 clamped diodes and two auxiliary capacitors ($C_1$ and $C_2$) and two auxiliary insulated gate bipolar transistor (IGBT) modules ($T_1$ and $T_2$); or, in a second topology, said voltage self-balancing auxiliary circuit comprise comprises $6N$-3 clamped diodes and 4 interphase clamped diodes, **characterized in that** the modular multilevel converter (MMC) topologies has voltage self-balancing capability, wherein, the triggering signals of said auxiliary IGBT module ($T_1$) are consistent with the triggering signals of the first SMs of upper bridge arm in the Phase I module and the Phase III module, the triggering signals of said auxiliary IGBT module ($T_2$) are consistent with those of the triggering signals of the last SMs of lower bridge arm in the Phase II module.

**Patentansprüche**

**1.** Modulare mehrstufige Wandlertopologien (MMC) mit:

einem Phase I Modul, das eine erste Phase A bildet, einem Phase II Modul, das eine zweite Phase B bildet, einem Phase III Modul, das eine dritte Phase C bildet, und einem spannungsselbststabilisierenden Hilfsstromkreis, wobei das Phase I Modul, das Phase II Modul und das Phase III Modul jeweils zwei Brückenarme enthalten, die jeweils N Brückarmsubmodule SMs enthalten,
wobei die Submodule Kategorie I Submodule, Kategorie II Submodule und spezielle Submodule enthalten,
wobei in einer ersten Topologie der spannungsselbststabilisierende Hilfsstromkreis 6N+5 vorgespannte Dioden und zwei Hilfskondensatoren ($C_1$ und $C_2$) sowie zwei bipolare Transistor-Hilfsmodule ($T_1$ und $T_2$) mit isolierendem Gate (IGBT) enthält, oder in einer zweiten Topologie der spannungsselbststabilisierende Hilfsstromkreis 6N-3 vorgespannte Dioden und vier vorgespannte Zwischenphasendioden enthält,
**dadurch gekennzeichnet, dass** die modularen mehrstufigen Wandlertopologien (MMC) Spannungsselbststabilisierungsfähigkeit haben, wobei bei der ersten Topologie die Submodule, die in dem Phase I Modul und dem Phase II Modul enthalten sind, Kategorie I Submodule sind, die aneinander und auch an den positiven und den negativen Pol eines Gleichspannungsbusses angeschlossen sind, wobei Kategorie I Submodule über den Anschluss, der von dem positiven Pol des darin enthaltenen Kondensators ausgeht an den spannungsselbststabilisierenden Hilfsstromkreis angeschlossen sind, die in dem Phase II enthaltenen Submodule Kategorie II Submodule sind, die aneinander und auch an den positiven und den negativen Pol des Gleichspannungsbusses angeschlossen sind, wobei die Kategorie II Submodule über den Anschluss, der von dem negativen Pol des darin enthaltenen Kondensators ausgeht an den spannungsselbststabilisierenden Hilfsstromkreis angeschlossen sind,

oder

bei der zweiten Topologie, abgesehen von den ersten Submodulen des oberen Brückenarms in dem Phase I und dem Phase III Modul, die spezielle Submodule der Phasen A und C sind, die restlichen Submodule Kategorie I Submodule sind, wobei die Kategorie I Submodule über den Anschluss, der von dem positiven Pol des darin enthaltenen Kondensators ausgeht, an den spannungsselbststabilisierenden Hilfsstromkreis angeschlossen sind, abgesehen von dem letzten Submodul des unteren Brückenarms in dem Phase II Modul, welches das spezielle Submodul der Phase B ist, wobei die übrigen Submodule Kategorie II Submodule sind, die über den von dem negativen Pol des darin enthaltenen Kondensators ausgehenden Anschluss an den spannungsselbststabilisierenden Hilfsstromkreis angeschlossen sind.

2. Modulare mehrstufige Wandlertopologien (MMC) nach Anspruch 1, mit dem Phase I Modul, dem Phase II Modul, dem Phase III Modul und dem spannungsselbststabilisierenden Hilfsstromkreis, wobei das Phase I Modul, das Phase II Modul und das Phase III Modul jeweils zwei Brückenarme aufweisen, die jeweils N Brückenarmsubmodule (SM) enthalten, wobei in einer ersten Topologie, der spannungsselbststabilisierende Hilfsstromkreis 6N+5 vorgespannte Dioden und zwei Hilfskondensatoren ($C_1$ und $C_2$) sowie zwei Hilfs-IGBT-Module ($T_1$ und $T_2$) enthält, oder in einer zweiten Topologie der spannungsselbststabilisierende Hilfsstromkreis 6N-3 vorgespannte Dioden und 4 vorgespannte Zwischenphasendioden enthält, **dadurch gekennzeichnet, dass** die modularen mehrstufigen Wandlertopologien (MMC) Spannungsselbststabilisierungsfähigkeit haben, wobei in beiden Topologien, Kategorie I Submodule Halbbrückensubmodule, Vollbrückensubmodule oder einzeln vorgespannte Submodule oder gemischte Submodule dieser drei Kategorien enthalten, Kategorie II Submodule Halbbrückensubmodule, Vollbrückensubmodule oder einzeln vorgespannte Submodule oder eine Mischung dieser drei Kategorien enthalten, in einer zweiten Topologie, die speziellen Submodule Halbbrückensubmodule, Vollbrückensubmodule oder einzeln vorgespannte Submodule enthalten.

3. Modulare mehrstufige Wandlertopologien (MMC) nach einem der vorstehenden Ansprüche mit: dem Phase I Modul, dem Phase II Modul, dem Phase III Modul und dem spannungsselbststabilisierenden Hilfsstromkreis, wobei das Phase I Modul, das Phase II Modul und das Phase III Modul jeweils zwei Brückenarme enthalten, die jeweils N Brückarmsubmodule (SM) enthalten, wobei in einer ersten Topologie der spannungsselbststabilisierende Hilfsstromkreis 6N+5 vorgespannte Dioden und zwei Hilfskondensatoren ($C_1$ und $C_2$) sowie zwei Hilfs (IGBT)-Module ($T_1$ und $T_2$) enthält, oder in einer zweiten Topologie der spannungsselbststabilisierende Hilfsstromkreis 6N-3 vorgespannte Dioden und 4 vorgespannte Zwischenphasendioden enthält, **dadurch gekennzeichnet, dass** die modularen mehrstufigen Wandlertopologien (MMC) Spannungsselbststabilisierungsfähigkeit haben, wobei in einer ersten Topologie der positive Pol eines Hilfskondensators ($C_1$) an ein Hilfs-IGBT-Modul ($T_1$) angeschlossen ist und sein negativer Pol an die vorgespannten Diode und den positive Pol des Gleichspannungsbusses angeschlossen ist, der negativen Pol des anderen Hilfskondensators ($C_2$) mit dem anderen Hilfs-IGBT-Modul ($T_2$) verbunden ist und sein positiver Pol mit der vorgespannten Diode und dem negativen Pol des Gleichspannungsbusses verbunden ist, wobei die vorspannte Diode an den positiven Ausgangsanschluss des Kondensators des Kategorie I Submoduls und die positiven Pole der beiden Hilfskondensatoren ($C_1$ und $C_2$) angeschlossen ist und auch an den negativen Ausgangsanschluss des Kondensators des Kategorie II Submoduls und die negativen Pole der beiden Hilfskondensatoren ($C_1$ und $C_2$) angeschlossen ist,

oder

in der zweiten Topologie die vorgespannte Diode an den positiven Ausgangsanschluss des Kondensators des Kategorie I Submoduls angeschlossen ist und auch an den negativen Ausgangsanschluss des Kondensators des Kategorie II Submoduls angeschlossen ist, wobei der Ausgangsanschluss der speziellen Submodule der Phasen A und C $SM_{AC}$ mit dem Ausgangsanschluss des ersten Submoduls des oberen Brückenarms in der Phase B über die vorgespannte Zwischenphasendiode verbunden ist und der Ausgangsanschluss des speziellen Submoduls der Phase B $SM_B$ mit dem Ausgangsanschluss des letzten unteren Brückenarms SM in den Phasen A und C über die vorgespannte Zwischenphasendiode verbunden ist.

**4.** Modulare mehrstufige Wandlertopologien (MMC) nach einem der vorstehenden Ansprüche, mit: dem Phase I Modul, dem Phase II Modul, dem Phase III Modul und dem spannungsselbststabilisierenden Hilfsstromkreis, wobei das Phase I Modul, das Phase II Modul und das Phase III Modul jeweils zwei Brückenarme enthalten, die jeweils N Brückarmsubmodule (SMs) enthalten, wobei in einer ersten Topologie der spannungsselbststabilisierende Hilfsstromkreis 6N+5 vorgespannte Dioden und zwei Hilfskondensatoren ($C_1$ und $C_2$) sowie zwei Hilfs-IGBT-Module ($T_1$ und $T_2$) enthält, oder in einer zweiten Topologie der spannungsselbststabilisierende Hilfsstromkreis 6N-3 vorgespannte Dioden und 4 vorgespannte Zwischenphasendioden enthält, **dadurch gekennzeichnet, dass** die modularen mehrstufigen Wandlertopologien Spannungsselbststabilisierungsfähigkeit haben, wobei die Auslösesignale der Hilfs-IGBT-Module ($T_1$) mit den Auslösesignalen des ersten Submoduls des oberen Brückenarms in dem Phase I Modul und dem Phase III Modul konsistent sind, wobei die Auslösesignale der Hilfs-IGBT-Module ($T_2$) mit den Auslösesignalen der letzten Submodule des unteren Brückenarms in dem Phase II Modul konsistent sind.

## Revendications

**1.** Topologies de convertisseurs multiniveaux modulaires (MMC), comprenant :

un module de phase I formant une première phase A, un module de phase II formant une seconde phase B, un module de phase III formant une troisième phase C et un circuit auxiliaire d'auto équilibrage de tension, ledit module de phase I, module de phase II et module de phase III comprennent respectivement deux bras de pont, dont chacun comprend N sous modules de bras de pont SMs, dans lequel les SMs comprennent des SMs de catégorie I, SMs de catégorie II et SMs spéciaux ; dans une première topologie, ledit circuit auxiliaire d'auto équilibrage de tension comprend 6N+5 diodes serrées et deux condensateurs auxiliaires ($C_1$ et $C_2$) et deux modules de transistor bipolaire à grille isolée auxiliaire IGBT ($T_1$ et $T_2$) ; ou dans une seconde topologie, ledit circuit auxiliaire d'auto équilibrage de tension comprend 6N-3 diodes serrées et 4 diodes serrées à interphase, **caractérisé en ce que** les topologies de convertisseurs multiniveaux modulaires (MMC) ont une capacité d'auto équilibrage de tension, dans lequel, dans la première topologie, les SMs contenus dans ledit module de phase I et ledit module de phase III sont des SMs de catégorie I, qui sont connectés l'un à l'autre et aussi aux pôles positif et négatif du bus CC, lesdits SMs de catégorie I, via le port sortant du pôle positif du condensateur contenu dans celui-ci, sont connectées audit circuit auxiliaire d'auto équilibrage de tension, les SMs contenus dans ledit module de phase II sont les SMs de catégorie II, qui sont connectés l'un à l'autre et aussi au pôle positif et négatif du bus CC, lesdits SMs de catégorie II, via le port sortant du pôle négatif du condensateur contenu dans celui-ci, sont connectés audit circuit auxiliaire d'auto équilibrage de tension ;
ou,
dans la seconde topologie, à l'exception des premiers SMs du bras de pont supérieur dans le module de phase I et du module de phase III, qui sont les SMS spéciaux des phases A et C, les SMs restants sont des SMs de catégorie I, lesdits SMs de catégorie I, via le port sortant du pôle positif du condensateur contenu dans celui-ci, sont connectés audit circuit auxiliaire d'auto équilibrage de tension, à l'exception du dernier SM du bras de pont inférieur dans le module de phase II, qui est le SM spécial de phase B, les SMs restants sont des SMs de catégorie II, via le port sortant du pôle négatif du condensateur contenu dans celui-ci, sont connectés audit circuit auxiliaire d'auto équilibrage de tension.

**2.** Topologies de convertisseurs multiniveaux modulaires (MMC) selon la revendication 1, comprenant : le module de phase I, le module de phase II, le module de phase III et le circuit auxiliaire d'auto équilibrage de tension, lesdits module de phase I, module de phase II et module de phase III comprennent respectivement le bras de pont, dont chacun comprend N sous modules de bras de pont (SMs) ; dans une première topologie, ledit circuit auxiliaire d'auto équilibrage de tension comprend 6N+5 diodes serrées et deux condensateurs auxiliaires ($C_1$ et $C_2$) et deux modules de transistor bipolaire à grille isolée auxiliaire IGBT ($T_1$ et $T_2$) ; ou dans une seconde topologie, ledit circuit auxiliaire d'auto équilibrage de tension comprend 6N-3 diodes serrées et 4 diodes serrées à interphase, **caractérisé en ce que** les topologies de convertisseurs multiniveaux modulaires (MMC) ont une capacité d'auto équilibrage de tension, dans lequel, dans les deux topologies, des SMs de catégorie I comprennent des SMs en demi-pont, des SMs en pont complet ou des SMS en un seul serrage, ou les SMs mixtes de ces trois, les SMs de catégorie II comprennent des SMs en demi-pont, des SMs en pont complet ou des SMS en un seul serrage, ou les SMs mixtes de ces trois, dans une seconde topologie, les SMs spéciaux comprennent des SMs en demi-pont, des SMs en pont complet ou des SMS en un seul serrage.

**3.** Topologies de convertisseur multiniveau modulaire (MMC) selon une quelconque des revendications précédentes, comprenant : le module de phase I, le module de phase II, le module de phase III et le circuit auxiliaire d'auto équilibrage de tension, ledit module de phase I, module de phase II et module de phase III comprennent respectivement deux bras de pont, dont chacun comprend N sous modules de bras de pont SMs ; dans une première topologie, ledit circuit auxiliaire d'auto équilibrage de tension comprend 6N+5 diodes serrées et deux condensateurs auxiliaires ($C_1$ et $C_2$) et deux modules de transistor bipolaire à grille isolée auxiliaire IGBT ($T_1$ et $T_2$) ; ou dans une seconde topologie, ledit circuit auxiliaire d'auto équilibrage de tension comprend 6N-3 diodes serrées et 4 diodes serrées à interphase, **caractérisé en ce que** les topologies de convertisseurs multiniveaux modulaires (MMC) ont une capacité d'auto équilibrage de tension, dans lequel

dans une première topologie, le pôle positif d'un condensateur auxiliaire ($C_1$) est connecté avec un module IGBT auxiliaire ($T_1$) et son pôle négatif est connecté avec la diode serrée et le pôle positif du bus CC, le pôle négatif de l'autre condensateur auxiliaire ($C_2$) est connecté avec l'autre module IGBT auxiliaire ($T_2$) et son pôle positif est connecté avec la diode serrée et le pôle négatif du bus CC, la diode serrée est connectée au port de sortie positif du condensateur SM de catégorie I et aux pôles positifs des deux condensateurs auxiliaires ($C_1$ et $C_2$), et aussi connectée au port de sortie négatif du condensateur SM de catégorie II et aux pôles négatifs des deux condensateurs auxiliaires ($C_1$ et $C_2$),

ou

dans une seconde topologie, la diode serrée est connectée au port de sortie positive du condensateur SM de catégorie I et aussi connectée au port de sortie négatif du condensateur SM de catégorie II, le port de sortie des SMs spéciaux des phases A et C $SM_{AC}$ est connecté avec le port de sortie des premiers SMs des bras de pont supérieurs dans la phase B via la diode serrée à interphase, et le port de sortie du SM spécial des phases B $SM_B$ est connecté avec le port de sortie du dernier bras de pont inférieur SM dans les phases A et C via la diode serrée à interphase.

4.  Topologies de convertisseurs multiniveaux modulaires (MMC) selon une quelconque des revendications précédentes, comprenant : le module de phase I, le module de phase II, le module de phase III et le circuit auxiliaire d'auto équilibrage de tension, ledit module de phase I, module de phase II et module de phase III comprennent respectivement deux bras de pont, dont chacun comprend N sous modules de bras de pont SMs ; dans une première topologie, ledit circuit auxiliaire d'auto équilibrage de tension comprend 6N+5 diodes serrées et deux condensateurs auxiliaires ($C_1$ et $C_2$) et deux modules de transistor bipolaire à grille isolée auxiliaire IGBT ($T_1$ et $T_2$) ; ou dans une seconde topologie, ledit circuit auxiliaire d'auto équilibrage de tension comprend 6N-3 diodes serrées et 4 diodes serrées à interphase, **caractérisé en ce que** les topologies de convertisseurs multiniveaux modulaires (MMC) ont une capacité d'auto équilibrage de tension, dans lequel les signaux de déclenchement dudit module IGBT auxiliaire ($T_1$) sont cohérents avec les signaux de déclenchement des premiers SMs des bras de pont supérieur dans le module de phase I et le module de phase III, les signaux de déclenchement dudit module IGBT auxiliaire ($T_2$) sont cohérents avec ceux des signaux de déclenchement des derniers SMs du bras de pont inférieur dans le module de phase II.

Figure 1

Figure 2

Figure 3 (a)

Figure 3 (b)

SM$_1$

$n_1$

$n_2$

$n_3$

Figure 3 (c)

SM$_2$

$n_1$

$n_2$

$n_3$

Figure 3 (a)

SM$_2$

$n_1$

$n_2$

$n_3$

Figure 4 (b)

SM$_2$

$n_1$

$n_2$

$n_3$

Figure 4 (c)

Figure 5 (a)

Figure 5 (b)

Figure 5 (c)

Figure 6 (a)

Figure 6 (b)

Figure 6 (c)

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102832841 A